Europäisches Patentamt

(19) European Patent Office

Office européen des brevets

(11) Publication number: **0 097 242**
**B1**

(12) # EUROPEAN PATENT SPECIFICATION

(45) Date of publication of patent specification: **21.01.87**

(51) Int. Cl.⁴: **H 01 S 3/16**

(21) Application number: **83104765.9**

(22) Date of filing: **14.05.83**

---

(54) Emerald laser.

---

(30) Priority: **17.06.82 US 389317**

(43) Date of publication of application:
**04.01.84 Bulletin 84/01**

(45) Publication of the grant of the patent:
**21.01.87 Bulletin 87/04**

(84) Designated Contracting States:
**DE FR GB IT**

(56) References cited:
**EP-A-0 010 397**
**GB-A-2 116 772**

**JOURNAL OF APPLIED SPECTROSCOPY, vol.
34, no. 1, January 1981, pages 89-94, Plenum
Publishing Corp., New York, US; B.V.
SHUL'GIN et al.: "Electronic spectra and
structure of beryl and chrysoberyl"**

**JOURNAL OF APPLIED PHYSICS, vol. 32, no. 8,
August 1961, pages 1624-1625, New York, US;
F.E. GOODWIN: "Maser action in emerald"**

(73) Proprietor: **ALLIED CORPORATION
Columbia Road and Park Avenue P.O. Box 2245R
(Law Dept.)
Morristown New Jersey 07960 (US)**

(72) Inventor: **Shand, Michael Lee
188 Mt. Kemple Avenue
Morristown New Jersey 07960 (US)**
Inventor: **Walling, John Curtis
1 Cherry Court
White House Station New Jersey 08889 (US)**

(74) Representative: **Myerscough, Philip Boyd et al
J.A.Kemp & Co. 14, South Square Gray's Inn
London, WC1R 5EU (GB)**

(56) References cited:

**PHYSICAL REVIEW, vol. 160, no. 2, 10th August
1967, pages 307-312, New York, US; P. KISLIUK
et al.: "Radiation from the 4T2 state of Cr3+ in
ruby and emerald"**

**IEEE JOURNAL OF QUANTUM ELECTRONICS,
vol. QE-18, no. 11, November 1982, pages
1829-1830, IEEE, New York, US; M.L. SHAND et
al.: "A tunable emerald laser"**

Courier Press, Leamington Spa, England.

## Description

### Background of the invention
### 1. Field of the invention

This invention relates to lasers and, more particularly, to a solid-state laser whose laser medium is a single crystal of emerald $(Be_3Al_2(SiO_3)_6:Cr^{3+})$.

### 2. Description of the prior art

A number of solids, both crystals and glasses, have been found to be suitable for laser action since the first (solid-state) laser was demonstrated by Maiman in 1960. Generally, the laser-active materials involve a rare earth, actinide, or transition metal dopant in a crystalline or glass host. An extensive treatment of then-known solid-state lasers was published in 1976—*Solid-State Laser Engineering*, W. Koechner, Springer-Verlag, New York. More recently, a compilation of laser crystals was presented in *Laser Crystals*, A. A. Kaminskii, Springer-Verlag, New York (1981). Laser action has also been demonstrated in alexandrite $(BeAl_2O_4:Cr^{3+})$, a naturally occurring mineral having the chrysoberyl structure (U.S. Patent 3,997,853). Among the distinctive features of the alexandrite laser is its tunability (U.S. Patent 4,272,733).

The fluorescent emission spectrum of emerald has been studied by several groups (G. Burns et al., Phys. Rev. *139*, A 1687 (1965); P. Kisliuk, Phys. Rev. *160*, 307 (1967)). They measured the temperature dependence of wavelength, linewidth, quantum efficiency, etc. of the radiation accompanying the $^4T_2 \rightarrow {}^4A_2$ transition.

### Summary of the invention

In accordance with the present invention, a laser is provided that comprises a laser medium comprising a single crystal of emerald $(Be_3Al_2(SiO_3)_6:Cr^{3+})$ and pump means for exciting the laser medium to emit coherent radiation. Generally, the laser includes mirrors forming an optical resonator adapted for maintaining laser oscillations between the mirrors. The output of the laser is broadly tunable; thus, if the laser includes tuning means the output can be selected at any wavelength in the deep red to near infrared range of the electromagnetic spectrum.

Besides tunability, another advantage provided by the emerald laser medium is 4-level operation. A 4-level laser is a class of lasers characterized by the fact that the terminal level for the laser transition is not the ground state of the ion. In these lasers there can be little if any reabsorption of laser emission by the unexcited ground state ions within the laser host. This permits low threshold, high efficiency operation of the laser. In emerald, as in other phonon-terminated lasers, the laser transition involves the simultaneous emission of a photon and a phonon, so any reabsorption of this emission requires the simultaneous absorption of both quanta. The probability of this reabsorption is understandably low, so the threshold for emerald 4-level laser action is low.

The tunable laser of the present invention avoids the disadvantages of both tunable dye lasers and previously known vibronic lasers other than alexandrite. High power operation can be achieved without need for auxiliary equipment; Q-switched operation is possible; and the laser medium is stable and neither toxic nor corrosive. Emission is partly in the visible portion of the spectrum. As in the case of alexandrite, laser gain increases with increasing temperature.

In accordance with a second aspect of the invention, a laser amplifier is provided that comprises:

a laser medium comprising a single crystal of $Be_3Al_2(SiO_3)_6:Cr^{3+}$ and

pump means for exciting the laser medium to emit a first beam of coherent radiation;

a second laser medium comprising a single crystal of $Be_3Al_2(SiO_3)_6:Cr^{3+}$, said second laser medium positioned in the first beam of coherent radiation; and

pump means for exciting the second laser medium to emit a second beam of coherent radiation.

### Brief description of the drawings

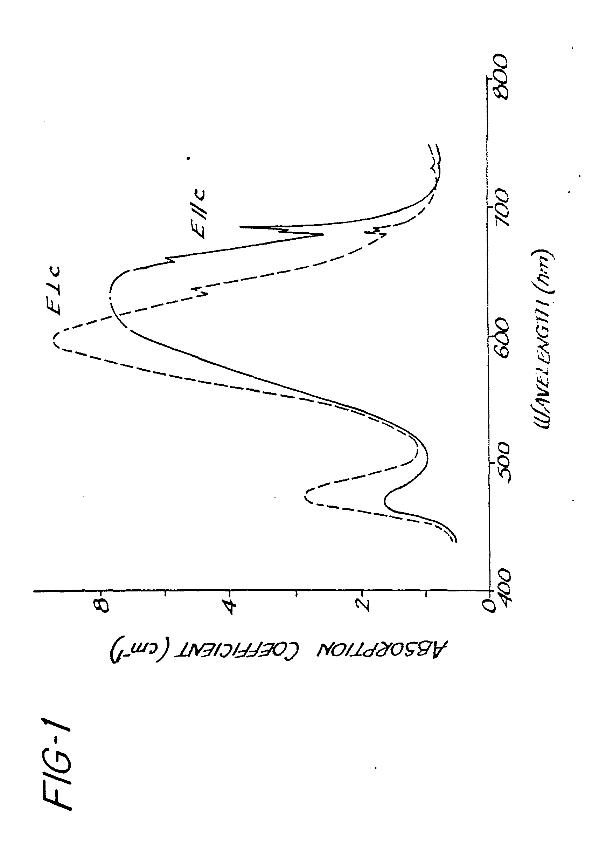

Figure 1 is an absorption spectrum for emerald.

Figure 2 is a graph of single pass gain in an emerald rod.

Figure 3 is a diagrammatic illustration in partial cross-section of a typical laser apparatus using a laser rod together with optional tuning means.

Figure 4 is a schematic illustration of an oscillator-amplifier laser system.

### Detailed description of the invention

The laser medium employed in this invention comprises a single crystal of emerald, $Be_3Al_2(SiO_3)_6:Cr^{3+}$. The emerald is excited by a pump source of incoherent or coherent radiation and emits coherent radiation at a wavelength in the deep red to near infrared range of the electromagnetic spectrum. A tuning means may be incorporated in the laser to permit the output wavelength to be selected.

Emerald, chromium-doped beryl, is a hexagonal crystal that occurs naturally and that can also be prepared synthetically by flux growth or hydrothermal growth (U.S. Patents 3,567,642; 3,567,643; and 3,723,337). Hydrothermal growth is generally preferred, because higher optical quality crystals can be grown by that method. The unique axis of the crystal is the c axis. For use as a laser medium, an emerald crystal is preferably either rod-shaped or slab-shaped. A slab preferably has a substantially rectangular cross-section in a plane normal to its long dimension, with the width/thickness ratio of the rectangle equal to or greater than 2. Preferably, the long dimension is perpendicular to the c axis of the crystal to provide high gain. Alternatively, the long dimension may be parallel to the c-axis. In addition, for optimum laser output, the crystal should be cut so as to minimize breakup of the beam that is passed through the long dimension of the laser medium.

Beam breakup is caused by planes in the crystal having slightly different indices of refraction. Each of these "growth" planes, along which the index of refraction is constant, is parallel to the others and perpendicular to the direction of fastest crystal growth. Beam breakup can be observed by passing a probe beam through the crystal at a small angle to the growth planes. Directing the probe beam parallel to these planes minimizes (or almost eliminates) beam breakup. Beam breakup can also be minimized by orienting the crystal so that the beam forms a large angle with the planes — 15° or more, preferably 90°.

With hydrothermally-grown emerald, constraints on growth conditions generally require the long dimension, in a rod geometry, to be nearly parallel to the growth planes. Therefore, the laser rod axis should be aligned exactly parallel to those planes. In a slab geometry, the laser beam follows a zigzag path, making the angle between planes and beam on the order of 30° and substantially eliminating breakup.

The growth planes in a crystal can best be determined with a probe beam. For hydrothermal growth, the growth direction is nearly, but not necessarily exactly, perpendicular to the seed plate, and the growth planes are frequently parallel to a large natural facet of the fully-grown crystal.

The emerald laser medium is optically pumped. In general, it is desirable to have pump radiation absorbed uniformly throughout the laser medium. Since absorption depends on chromium concentration, there is an inverse relationship between rod diameter or slab thickness and optimum dopant concentration. For typical diameters and thicknesses, the chromium dopant concentration is preferably in the range from 0.002 to 20 atom percent with respect to aluminum sites, more preferably from 0.1 to 10 atom percent.

Suitable pump lamps are those that emit strongly in the wavelength region in which emerald absorbs, for example lamps which emit at wavelengths shorter than 700 nm are suitable. Such lamps, well known in the art, include gaseous discharge lamps, filled with xenon and/or krypton and designed to operate either continuous wave (cw) or pulsed, and metallic vapor sources such as mercury, sodium, cesium, rubidium, and/or potassium. A cw mercury arc lamp has been found particularly suitable as a pumping source for cw laser operation, and a pulsed xenon arc lamp particularly suitable as a pumping source for pulsed laser operation.

Alternatively, the emerald laser medium may be pumped with a coherent light source, either pulsed or cw, that emits in the wavelength region in which emerald absorbs. For cw excitation the krypton ion and argon ion lasers are representative. For pulsed laser excitation, almost any coherent source having adequate power and an emission wavelength below 695 nm would be an effective pump for the present laser. Examples of suitable sources are doubled Nd:YAG, excimer lasers, and nitrogen lasers.

In addition to the basic elements of the laser, i.e., the laser medium and optical pump, the laser of the present invention may optionally include means for Q-switching. The Q-switch "spoils" the quality factor, Q, of the cavity for an interval of time during which energy is stored. At the appropriate moment, the Q-switch is turned to the high gain condition, and the stored energy in the medium is suddenly released in a "giant pulse" of very short duration. Q-switch means may comprise a saturable dye absorber, an acoustooptic Q-switch, or a polarizer and Pockels cell placed in the beam path. The polarizer may be omitted, particularly at low excitation power. The laser may also be mode-locked to produce pulse widths inversely related to the bandwidth.

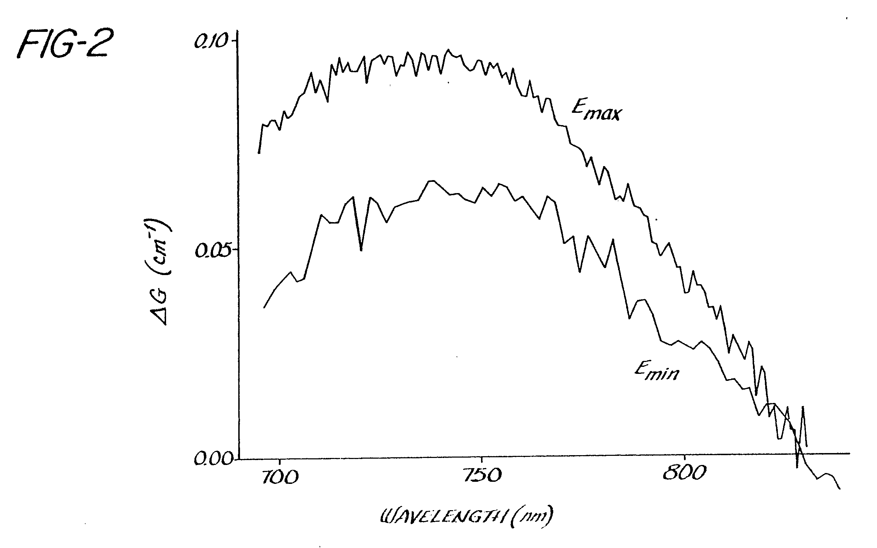

The wavelength range over which emerald lasers can be seen by reference to Figure 2, where the single pass gain is shown for two different polarization directions in a 24 mm long emerald rod. The single pass gain, $\Delta G$, is defined by $\Delta G = 1n \ (I_p/I_u)$, where $I_p$ is the intensity of a probe beam after passing through a rod that is pumped and $I_u$ is the intensity of the probe beam after passing through an unpumped rod. It can be seen that gain and, consequently, laser emission is observed in a wavelength range from less than 700 nm to 830 nm. Since there is no ground state absorption at wavelengths longer than 735 nm, $\Delta G$ is due entirely to laser gain in that region. Below 735 nm, part of $\Delta G$ is due to ground state absorption.

The rod used in the measurements shown in Figure 2 had its hexagonal (c) axis at 45° to the rod axis so that the two polarization directions gave different results—one direction corresponds to $E \perp c$ and the other to $E//c$. The polarization direction corresponding to larger absorption at 700 nm is called $E_{max}$ and the perpendicular polarization is $E_{min}$.

To accomplish tuning, any conventional tuning means may be used. Examples of suitable tuning means include a prism, optical grating, birefringent filter, multilayer dielectric coated filter, or lens having longitudinal chromatic aberration. Particularly suitable is a birefringent filter of the general type described by G. Holtom and O. Teschke, "Design of a Birefringent Filter for High-Power Dye Lasers", IEEE J. Quantum Electron, QE-10, 577 (1974). This type of filter is sometimes referred to as a "Lyot filter". (B. Lyot, Compt. Rend. 197, 1593 (1933).

A high power emerald laser may comprise the basic laser, as described above, as the "oscillator stage" of a laser amplifier. The amplifier uses such an oscillator stage to provide input radiation for one or more "amplifier stages", which typically include an emerald crystal and flashlamp, or other pump source, mounted inside an optical cavity.

An advantage of emerald as compared with some other tunable solid-state laser material is that it can operate at room temperature and above, in addition to lower temperatures. Depending on the power level, it may be desirable to include means for controlling the laser rod temperature. Temperature control means may be any of those well known in the art; for example, a circulating fluid adapted for absorbing heat from, or transmitting heat to, the laser medium. The circulating fluid may be air, water, a cryogenic liquid, etc. A heater is used to control the fluid temperature when necessary.

As the temperature is increased, a limitation on laser operation is set by a corresponding reduction of the lifetime of the excited state of chromium ions. Excitation is best accomplished during a time interval that is of the order of the lifetime, or shorter. If the lifetime is reduced below 60 µs, flashlamps having a useful operating life are not readily available to provide sufficient excitation in the required short time interval.

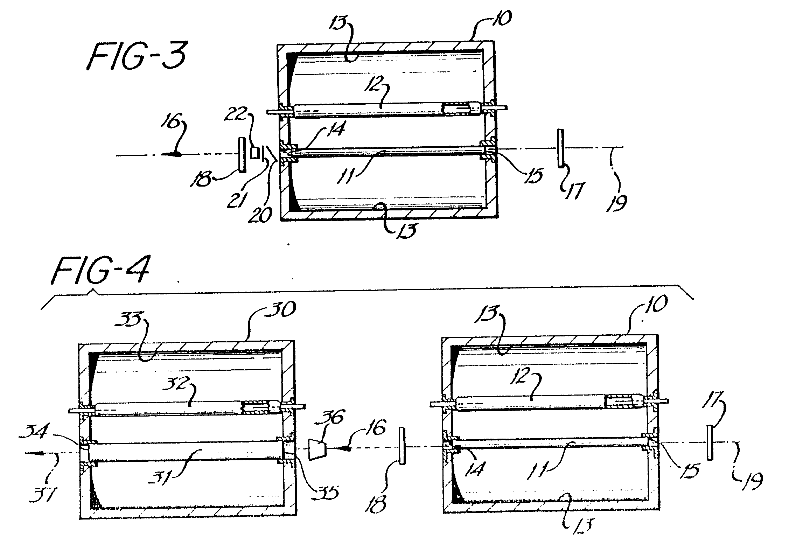

Figure 3 illustrates a laser apparatus of this invention. The laser medium 11, comprising an emerald crystal, and pumping source 12 are housed in container 10, which has a highly reflective inner surface 13 which defines an elliptical cavity. Reflection at surface 13 may be diffuse or specular. The axes of the laser medium 11 and the pumping source 12 are each located along a focal line of the ellipse formed by container 10. Laser medium 11 is normally provided with coated ends 14 and 15 having a conventional dielectric anti-reflection coating. Completely reflecting mirror 17, optional tuning element 20, and partially reflecting mirror 18 are positioned external to container 10 along cylindrical axis 19 of laser medium 11. Lasing action is evidenced by emission of highly collimated coherent radiation whose wavelength is determined by the orientation of the tuning element 20. The radiation, shown as arrow 16, emanates from partially reflecting mirror 18. Mirrors 17 and 18 may both be partially reflecting. If necessary to maintain the desired operating temperature, laser medium 11 and pumping source 12 are cooled by a fluid circulated through container 10. An optional Q-switch is shown as comprising polarizer 21 and Pockels cell 22.

As shown in Figure 4, an amplifier stage may be used with the apparatus of Figure 3 in a high power laser system of this invention. The apparatus of Figure 3 is then considered the "oscillator stage" of the amplifier. The amplifier stage is located in the output beam of the oscillator stage. It consists essentially of a container 30 which has a highly reflective inner surface 33 which defines an elliptical cavity. An amplifier rod 31, excited by flash lamp 32, is normally provided with coated ends 34 and 35 having a conventional dielectric anti-reflection coating. The amplifier rod may be of larger diameter than the oscillator rod 11, in which case a beam expanding telescope 36 is located between the stages in order to match the beam size to the rod size. Unlike the oscillator stage, the amplifier stage normally does not have mirrors at its ends to form a cavity, and the amplification of the oscillator output occurs during only one pass of the laser beam through the amplifier rod. However, for some applications, the amplifier may be fitted with partially reflecting mirrors to feed back part of the amplifier output into the amplifying medium. The spectral and temporal characteristics of the output of this regenerative oscillator can then be determined by injecting a suitably tailored signal from the primary oscillator in a manner similar to that employed with the single pass amplifier. More than one amplifier stage may be used. The amplified output shown as arrow 37 emanates from amplifier rod 31.

The following Example is presented in order to provide a more complete understanding of the invention. The specific techniques, conditions, materials, and reported data set forth to illustrate the principles and practice of the invention are exemplary and should not be construed as limiting the scope of the invention.

Example

An emerald rod 19 mm long×4 mm diameter was cut from a hydrothermally grown crystal with its hexagonal axis at 45° to the rod axis. The rod was mounted in a water-cooled ceramic flashlamp housing. The optical cavity had a reflective mirror at one end and a 95% output mirror at the other end. Both mirrors were concave, with a 4 µm focal length. The rod was pumped with two 80 µs-duration xenon flashlamps operating in parallel. The laser emitted 6.8 mJ at 757.4 nm. With output mirrors having different reflectivity spectra, the laser emitted at 751.1, 753.8, 758.8, and 759.2 nm.

**Claims for Contracting States: DE, FR and IT**

1. A laser comprising:
a laser medium comprising a single crystal of $Be_3Al_2(SiO_3)_6:Cr^{3+}$ and
pump means for exciting the laser medium to emit coherent radiation.

2. The laser of Claim 1 in which the laser medium is substantially in the shape of a cylindrical rod whose long dimension is along the cylinder axis.

3. The laser of Claim 1 in which the laser medium is substantially in the shape of a slab having a substantially rectangular cross-section in a plane normal to its long dimension.

4. The laser of Claim 2 or 3 in which the long dimension of the crystal is substantially perpendicular to the c axis of the crystal.

5. The laser of Claim 1 in which the $Cr^{3+}$ concentration is in the range between 0.001 and 10 atom percent with respect to aluminum sites.

6. The laser of Claim 1 in which the pump means comprises a pulsed coherent or incoherent light source emitting at wavelengths shorter than 700 nm.

7. The laser of Claim 1 in which the pump means comprises a continuous coherent or incoherent light source emitting at wavelengths shorter than 700 nm.

8. The laser of Claim 1 further comprising means for controlling the temperature of the laser medium.

9. The laser of Claim 1 further comprising means for tuning the coherent radiation in a spectral range from red to infrared.

10. A laser amplifier comprising:

the laser of Claim 1 to emit a first beam of coherent radiation;

a second laser medium comprising a single crystal of $Be_3Al_2(SiO_3)_6:Cr^{3+}$, said second laser medium positioned in the first beam of coherent radiation; and

pump means for exciting the second laser medium to emit a second beam of coherent radiation.

**Claims for Contracting States: GB**

1. A laser comprising:

a laser medium comprising a single crystal of $Be_3Al_2(SiO_3)_6:Cr^{3+}$ and

pump means for exciting the laser medium to emit coherent radiation, the laser medium being substantially in the shape of either a cylindrical rod whose long dimension is along the cylinder axis or a slab having a substantially rectangular cross-section in a plane normal to its long dimension, the long dimension of the crystal being substantially perpendicular to the c axis of the crystal.

2. A laser according to Claim 1 in which the $Cr^{3+}$ concentration is between 0.001 and 10 atom percent with respect to aluminum sites.

3. A laser according to Claim 1 or 2 in which the pump means comprises a pulsed coherent or incoherent light source emitting at wavelengths shorter than 700 nm.

4. A laser according to Claim 1 or 2 in which the pump means comprises a continuous coherent or incoherent light source emitting at wavelengths shorter than 700 nm.

5. A laser according to any one of Claims 1 to 4 further comprising means for controlling the temperature of the laser medium.

6. A laser according to any one of Claims 1 to 5 further comprising means for tuning the coherent radiation in a spectral range from red to infrared.

7. A laser amplifier comprising:

a laser as claimed in any one of the preceding claims to emit a first beam of coherent radiation;

a second laser medium comprising a single crystal of $Be_3Al_2(SiO_3)_6:Cr^{3+}$, said second laser medium positioned in the first beam of coherent radiation; and

pump means for exciting the second laser medium to emit a second beam of coherent radiation.

**Patentansprüche für die Vertragsstaaten: DE, FR und IT**

1. Laser mit

einem Lasermedium, das einen Einkristall aus $Be_3Al_2(SiO_3)_6:Cr^{3+}$ umfaßt, und

Pumpeinrichtungen zum Erregen des Lasermediums, um kohärente Strahlung zu emittieren.

2. Laser nach Anspruch 1, bei dem das Lasermedium im wesentlichen in der Form eines zylindrischen Stabes vorliegt, dessen lange Abmessung entlang der Zylinderachse liegt.

3. Laser nach Anspruch 1, bei dem das Lasermedium im wesentlichen in der Form einer Platte mit einem im wesentlichen rechteckigen Querschnitt in einer Ebene normal zu ihrer langen Abmessung vorliegt.

4. Laser nach Anspruch 2 oder 3, bei dem die lange Abmessung des Kristalls im wesentlichen senkrecht zu der c-Achse des Kristalles liegt.

5. Laser nach Anspruch 1, bei dem die $Cr^{3+}$-Konzentration im Bereich zwischen 0,001 und 10 Atom-% bezüglich der Aluminiumstellen ist.

6. Laser nach Anspruch 1, bei dem die Pumpeinrichtungen eine gepulste kohärente oder inkohärente Lichtquelle aufweisen, die bei Wellenlängen kürzur als 700 nm emittiert.

7. Laser nach Anspruch 1, bei dem die Pumpeinrichtungen eine kontinuierliche kohärente oder inkohärente Lichtquelle aufweisen, die bei Wellenlängen kürzer als 700 nm emittiert.

8. Laser nach Anspruch 1, der außerdem Einrichtungen zur Steuerung der Temperatur des Lasermediums hat.

9. Laser nach Anspruch 1, der außerdem Einrichtungen zum Abstimmen der kohärenten Strahlung in einem Spektralbereich von Rot bis Infrarot aufweist.

10. Laserverstärker mit

dem Laser nach Anspruch 1 zum Emittieren eines ersten Strahles kohärenter Strahlung,

einem zweiten Lasermedium, das einen Einkristall von $Be_3Al_2(SiO_3)_6:Cr^{3+}$ aufweist, wobei dieses zweite Lasermedium in dem ersten Strahl kohärenter Strahlung angeordnet ist, und

Pumpeinrichtungen zum Erregen des zweiten Lasermediums, um einen zweiten Strahl kohärenter Strahlung zu emittieren.

**Patentansprüche für die Vertragsstaaten: GB**

1. Laser mit

einem Lasermedium, das einen Einkristall von $Be_3Al_2(SiO_3)_6:Cr^{3+}$ aufweist, und

Pumpeinrichtung zum Erregen des Lasermediums, um kohärente Strahlung zu emittieren, wobei das Lasermedium im wesentlichen in der Form entweder eines zylindrischen Stabes, dessen lange Abmessung entlang der Zylinderachse liegt, oder einer Platte mit einem im wesentlichen rechteckigen Querschnitt in der Ebene normal zu ihrer langen Abmessung vorliegt, wobei die lange Abmessung des Kristalles im wesentlichen senkrecht zu der c-Achse des Kristalles liegt.

2. Laser nach Anspruch 1, bei dem die $Cr^{3+}$-

Konzentration zwischen 0,001 und 10 Atom-% bezüglich der Aluminiumstellen liegt.

3. Laser nach Anspruch 1 oder 2, bei dem die Pumpeinrichtungen eine gepulste kohärente oder inkohärente Lichtquelle aufweist, die bei Wellenlängen kürzer als 700 nm emittiert.

4. Laser nach Anspruch 1 oder 2, bei dem die Pumpeinrichtungen eine kontinuierliche kohärente oder inkohärente Lichtquelle aufweisen, die bei Wellenlängen kürzer als 700 nm emittiert.

5. Laser nach einem der Ansprüche 1 bis 4, der außerdem Einrichtungen zur Steuerung der Temperatur des Lasermediums aufweist.

6. Laser nach einem der Ansprüche 1 bis 5, der außerdem Einrichtungen zum Abstimmen der kohärenten Strahlung in einem Spektralbereich von Rot bis Infrarot aufweist.

7. Laserverstärker mit

einem Laser, wie er in einem der vorausgehenden Ansprüche beansprucht ist, um einen ersten Strahl kohärenter Strahlung zu emittieren,

einem zweiten Lasermedium, das einen Einkristall von $Be_3Al_2(SiO_3)_6:Cr^{3+}$ aufweist, wobei dieses zweite Lasermedium in dem ersten Strahl kohärenter Strahlung angeordnet ist, und

Pumpeinrichtungen zum Erregen des zweiten Lasermediums, um einen zweiten Strahl kohärenter Strahlung zu emittieren.

**Revendications pour les Etats Contractants: DE, FR et IT**

1. Laser comprenant:

un milieu laser comprenant un monocristal de $Be_3Al_2(SiO_3)_6:Cr^{3+}$, et

un moyen de pompage pour exciter le milieu laser pour qu'il émette un rayonnement cohérent.

2. Laser selon la revendication 1, dans lequel le milieu laser a sensiblement la forme d'un barreau cylindrique dont la grande dimension est selon l'axe du cylindre.

3. Laser selon la revendication 1, dans lequel le milieu laser a sensiblement la forme d'une lame ayant une section sensiblement rectangulaire dans un plan normal à sa grande dimension.

4. Laser selon l'une des revendications 2 ou 3, dans lequel la grande dimension du cristal est sensiblement perpendiculaire à l'axe c du cristal.

5. Laser selon la revendication 1, dans lequel la concentration en $Cr^{3+}$ est dans une gamme comprise entre 0,001 et 10 atomes pour cent par rapport aux sites d'aluminium.

6. Laser selon la revendication 1, dans lequel le moyen de pompage comprend une source de lumière en impulsions cohérente ou incohérente émettant à des longueurs d'onde inférieures à 700 nm.

7. Laser selon la revendication 1, dans lequel le moyen de pompage comprend une source lumineuse continue cohérente ou incohérente émettant à des longueurs d'onde inférieures à 700 nm.

8. Laser selon la revendication 1, comprenant en outre des moyens pour commander la température du milieu laser.

9. Laser selon la revendication 1, comprenant en outre des moyens pour accorder le rayonnement cohérent dans une gamme spectrale allant du rouge à l'infrarouge.

10. Amplificateur laser comprenant:

le laser de la revendication 1 pour émettre un premier faisceau de rayonnement cohérent;

un second milieu laser comprenant un monocristal de $Be_3Al_2(SiO_3)_6:Cr^{3+}$, ce second milieu laser étant positionné dans le premier faisceau de rayonnement cohérent; et

un moyen de pompage pour exciter le second milieu laser pour émettre un second faisceau de rayonnement cohérent.

**Revendications pour les Etats Contractants: GB**

1. Laser comprenant:

un milieu laser comprenant un monocristal de $Be_3Al_2(SiO_3)_6:Cr^{3+}$, et

un moyen de pompage pour exciter le milieu laser pour qu'il émette un rayonnement cohérent, le milieu laser ayant sensiblement la forme ou bien d'un barreau cylindrique dont la grande dimension est selon l'axe du cylindre, ou bien d'une lame ayant une second rectangulaire dans un plan normal à sa grande dimension, la grande dimension du cristal étant sensiblement perpendiculaire à l'axe c du cristal.

2. Laser selon la revendication 1, dans lequel la concentration en $Cr^{3+}$ est dans une gamme comprise entre 0,001 et 10 atomes pour cent par rapport aux sites d'aluminium.

3. Laser selon l'une des revendications 1 ou 2, dans lequel le moyen de pompage comprend une source de lumière en impulsions cohérente ou incohérente émettant à des longueurs d'onde inférieures à 700 nm.

4. Laser selon l'une des revendications 1 ou 2, dans lequel le moyen de pompage comprend une source lumineuse continue cohérente ou incohérente émettant à des longueurs d'onde inférieures à 700 nm.

5. Laser selon l'une quelconque des revendications 1 à 4, comprenant en outre des moyens pour commander la température du milieu laser.

6. Laser selon l'une quelconque des revendications 1 à 5, comprenant en outre des moyens pour accorder le rayonnement cohérent dans une gamme spectrale allant du rouge à l'infrarouge.

7. Amplificateur laser comprenant:

un laser selon l'une quelconque des revendications précédentes pour émettre un premier faisceau de rayonnement cohérent;

un second milieu laser comprenant un monocristal de $Be_3Al_2(SiO_3)_6:Cr^{3+}$, ce second milieu laser étant positionné dans le premier faisceau de rayonnement cohérent; et

un moyen de pompage pour exciter le second milieu laser pour émettre un second faisceau de rayonnement cohérent.

FIG-1

FIG-2

$\Delta G\ (cm^{-1})$

WAVELENGTH (nm)

$E_{max}$

$E_{min}$

FIG-3

FIG-4

0 097 242